# FASCICULE DE BREVET EUROPEEN

(11) **EP 0 403 911 B1**
(45) Date de publication et mention de la délivrance du brevet: **08.03.1995**
(21) Numéro de dépôt: 90110998.3
(22) Date de dépôt: 11.06.1990
(51) Int. Cl.: H04L 12/64

(54) **Procédé et dispositif de gestion d'acces au support de transmission d'un réseau de commutation reparti multiservices**
Verfahren und Einrichtung zur Verwaltung des Zugriffs auf das Übertragungsmedium eines verteilten Mehrdienst-Vermittlungsnetzes
Method and apparatus for the access control to the transmission medium of a distributed multiservice switching network

(30) Priorité: 19.06.1989 FR 8908114
(43) Date de publication de la demande: 27.12.1990
(73) Titulaire: ALCATEL BUSINESS SYSTEMS, F-75008 Paris (FR)
(72) Inventeur: Roux, Raphael, F-95100 Argenteuil (FR); Wu, Ji-Yong, F-75013 Paris (FR)
(74) Mandataire: Weinmiller, Jürgen

(56) Documents cités:
- EP-A- 0 122 765
- EP-A- 0 229 684
- EP-A- 0 276 349

## Description

La présente invention concerne un procédé et un dispositif de gestion d'accès au support de transmission d'un réseau de commutation réparti multiservices apte à commuter des trafics en mode circuit synchrone et en mode paquet synchrone ou asynchrone.

Les systèmes de commutation actuels utilisent soit le mode circuit, soit le mode paquet.

La difficulté de faire coexister ces deux modes tient au fait que d'une part la contrainte de communications de débits importants nécessite pour le mode circuit l'utilisation de plusieurs supports de transmission parallèles en commutation spatiale, ou de plusieurs intervalles de temps en commutation temporelle, ce qui est peu adapté pour le transfert d'informations sporadiques et conduit à une perte de capacité (réservation de ressources durant toute la communication), et que d'autre part, si des débits importants peuvent être véhiculés en mode paquet, la transmission d'informations synchrones n'est pas garantie sans délais importants.

Par ailleurs la commutation en mode paquet dans des systèmes de commutation répartis est résolue jusqu'à aujourd'hui par utilisation :
- soit d'un protocole d'accès aléatoire (par exemple les protocoles connus sous les appellations CSMA/CD-IEEE/802.3, ALOHA, etc...).
   Dans ce cas le temps d'accès au support de transmission est relativement court, mais à cause des collisions, c'est-à-dire des accès simultanés à ce support par différentes stations du réseau, le système devient instable dès que sa charge atteint une certaine limite,
- soit de protocoles d'accès déterministes (par exemple les protocoles connus sous les appellations TDMA, IEEE-802. 4, -802.5, etc...) qui présentent des délais d'accès relativement importants même lorsque le flux de trafic est très faible.

Les protocoles d'accès existants n'offrent pas simultanément un délai d'accès faible et une optimisation de rendement du support de transmission.

Il est connu, du document EP-A-0 122 765, un système permettant l'intégration de trafic synchrone et asynchrone sur un même bus de données. Dans ce système, ce bus de données est structuré en trames répétitives, elles-mêmes structurées en intervalles de temps, le trafic est un trafic en mode paquet, et à chaque paquet est affecté une priorité.

Lorsqu'une station cherche à établir une communication synchrone par l'intermédiaire de ce bus, une priorité faible lui est initialement affectée, et, une fois que cette station a obtenu succès dans l'accès au bus pour un intervalle de temps donné, et qu'elle souhaite continuer à transmettre du trafic synchrone dans cet intervalle de temps sur des trames successives, une priorité plus élevée lui est affectée, qui lui garantit un succès pour l'accès au bus.

La présente invention a pour objet un procédé qui permette simultanément une minimisation du délai d'accès et une optimisation du rendement du support de transmission.

La présente invention a pour objet un procédé de gestion d'accès au support de transmission d'un réseau de commutation réparti multiservices apte à commuter des trafics en mode circuit synchrone, et en mode paquet synchrone ou asynchrone, ledit réseau étant architecturé autour d'un support de transmission partagé dans le temps entre différentes stations, essentiellement caractérisé en ce que :
- le support de transmission est synchrone et structuré en trames elles-mêmes structurées en intervalles de temps, eux mêmes structurés en temps-cellules, ces derniers étant dimensionnés pour contenir une entité de communication qui peut être suivant le cas une cellule en circuit ou une cellule en paquet segmenté,
- un intervalle de temps idéal d'accès au support de transmission en mode paquet est affecté respectivement aux différentes stations communiquant à l'intérieur de ce réseau,
- il est procédé à chaque temps-cellule et pour l'ensemble des stations, à un arbitrage d'accès au support de transmission, afin d'assurer un accès à ce support en priorité par des cellules en circuit disponibles à cet instant dans toute station.

Suivant une autre caractéristique de l'invention, il est procédé à chaque temps-cellule et pour l'ensemble des stations, à un artibrage d'accès au support de transmission, afin d'assurer un accès à ce support, suivant des priorités décroissantes,par des cellules en circuit disponibles à cet instant dans toute station, par des cellules en paquets segmentés synchrones disponibles à cet instant dans toute station ayant un intervalle de temps idéal d'accès antérieur à l'intervalle de temps contenant le temps-cellule considéré, par des cellules en paquets segmentés synchrones disponibles à cet instant dans la station ayant pour intervalle de temps idéal d'accès l'intervalle de temps contenant le temps-cellule considéré, par des cellules en paquets segmentés asynchrones disponibles à cet instant dans toute station ayant pour intervalle de temps idéal d'accès un intervalle de temps antérieur à l'intervalle de temps contenant le temps-cellule considéré, par des cellules en paquets segmentés asynchrones disponibles à cet instant dans la station ayant pour intervalle de temps idéal d'accès l'intervalle de temps contenant le temps-cellule considéré.

Suivant une autre caractéristique de l'invention :
- les temps-cellules sont eux-mêmes structurés en temps-octets,
- un temps-octet d'accès au support de transmission en mode circuit est affecté respectivement à différentes stations communiquant à l'intérieur de ce réseau,
- pour toute station autorisée, à l'issue de l'arbitrage, à accéder en mode circuit au support de transmission, il est procédé à une validation successive de ces stations en fonction des différents temps-octets qui leur ont été affectés.

La présente invention a également pour objet un dispositif pour la mise en oeuvre de ce procédé.

D'autres objets et caractéristiques de la présente invention apparaîtront plus clairement à la lecture de la description suivante d'un exemple de réalisation, faite en relation avec les dessins ci-annexés dans lesquels :
- La figure 1 représente le schéma général d'un réseau de commutation réparti suivant l'invention.
- La figure 2 illustre la façon dont est structuré le support de transmission d'un réseau suivant l'invention, ainsi qu'un exemple d'allocation de trafic sur ce support.
- La figure 3a représente l'algorithme de gestion d'accès au support de transmission mis en oeuvre dans chaque station, les différents instants utilisés pour la définition des différentes étapes de cet algorithme étant représentés sur le chronogramme de la figure 3b.
- La figure 4 représente la schéma général d'une station

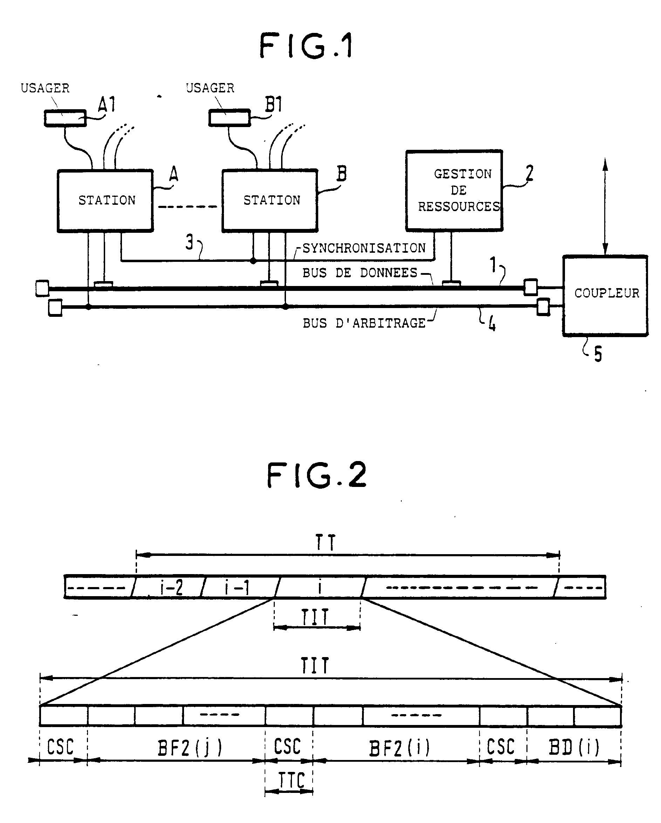

Sur la figure 1 on a représenté un ensemble de "n" stations A, ..., B d'un réseau de commutation réparti communiquant entre elles par un support de transmission 1 appelé aussi par la suite bus de données, partagé dans le temps entre différentes stations, chaque station pouvant consister elle même en un point de concentration de trafic provenant de différents utilisateurs A1, A2... B1, B2...

Comme illustré sur la figure 2, ce bus de données est un bus synchrone, structuré en trames répétitives de durée T_{T} elles mêmes structurées en différents intervalles de temps de durée T_{IT}, qui se décomposent à leur tour en différents temps-cellules de durée T_{TC}.

Chaque temps-cellule est dimensionné de manière à contenir suivant le cas soit une cellule dite en circuit, soit une cellule dite en paquet segmenté.

Les trafics traités par ce réseau peuveut être de plusieurs types :
- en mode circuit synchrone, de débit déterminé et fixe au cours du temps, par exemple 64 kbits/s pour un multiplex téléphonique à 32 voies codée suivant le mode MIC, les informations de parole portées par ce multiplex téléphonique constituant lesdites cellules en circuit,
- en mode paquet synchrone, de débit varié et variable au cours du temps, ce qui est par exemple le cas d'informations issues de terminaux de télécopie,
- en mode paquet asynchrone, ce qui est par exemple le cas d'informations issues de terminaux informatiques.

On entend par cellules en paquets segmentés des fragments de paquet tous munis de l'adresse de destination de ce paquet et ayant même dimension qu'une cellule en circuit.

Pour chaque temps-cellule se présentant sur le bus de données les cellules en circuit sont écoulées en priorité, afin d'écouler sans délai ce type de trafic.

Le trafic en mode paquet relatif à une station I est theoriquement écoulé sur un intervalle de temps ITᵢ de même rang i de trames successives, dit intervalle de temps idéal d'accès de cette station, alloué préalablement à celle-ci par un contrôleur de gestion de ressources 2 en fonction de la capacité du support de transmission, de la capacité nominale déjà allouée aux communications en cours à un instant donné, et de la capacité nominale nécessitée par la station faisant une demande d'accès au réseau à cet instant, de sorte que tous les trafics correspondant à ces capacités nominales puissent être écoulés sans délai.

Ce contrôleur de gestion de ressources ne constitue pas l'objet de la présente invention et ne sera donc pas décrit de façon plus détaillée.

En faisant par ailleurs correspondre l'instant théorique (ou idéal) ti d'accès d'une station I au support de transmission, avec la fin de paquettisation (effectuée dans les différentes stations) des données à transmettre sur ce support à cet instant, on minimise par ailleurs le délai d'accès des utilisateurs au support de transmission dans le cas de trafic en mode paquet.

En fixant la durée de trame égale au temps de paquettisation, ceci revient à fixer le début de paquettisation des données relatives à une station I à transmettre à l'instant d'accès idéal ti, avec l'instant d'accès précédant de cette station, soit ti-T_{T}. Sur la figure 1 est ainsi référencée 3 une liaison assurant cette synchronisation des stations en fonction des instants d'accès idéaux délivrés par le contrôleur de gestion de ressources 2.

En prévoyant par ailleurs un "débordement" de trafic en mode paquet synchrone issu d'une station, sur des cellules d'intervalles de temps non initialement affectés à cette station, en cas de "pointes" de trafic en mode paquet synchrone par rapport à la capacité nominale allouée, et en prévoyant inversement un "comblement" par du trafic asynchrone, de cellules non occupées par du trafic synchrone, en cas de "creux" de trafic synchrone, on assure une plus grande optimisation de rendement du support de transmission et une souplesse de configuration du système.

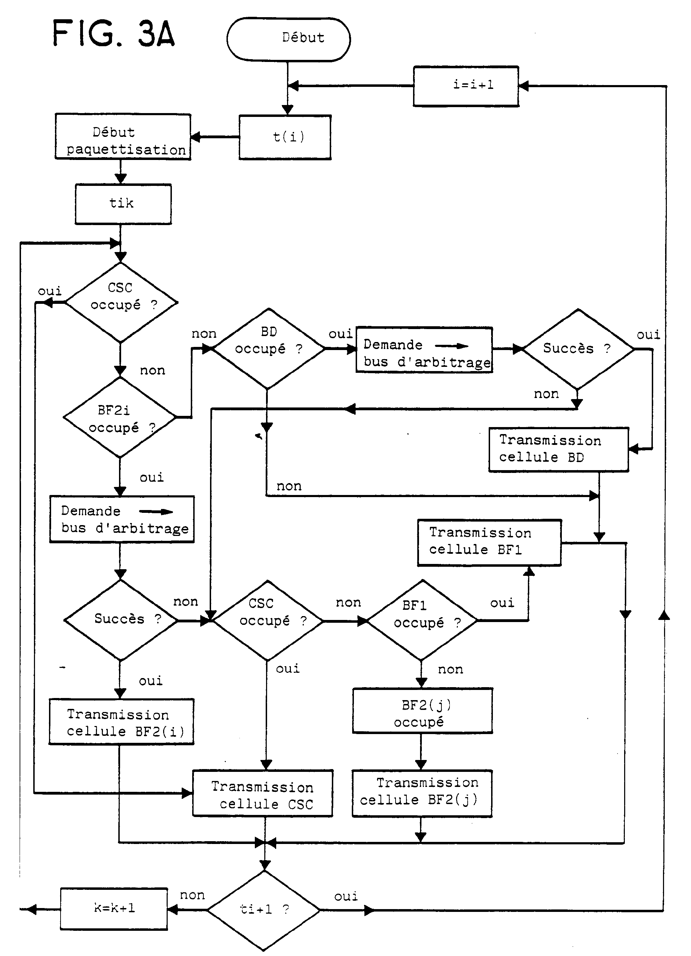

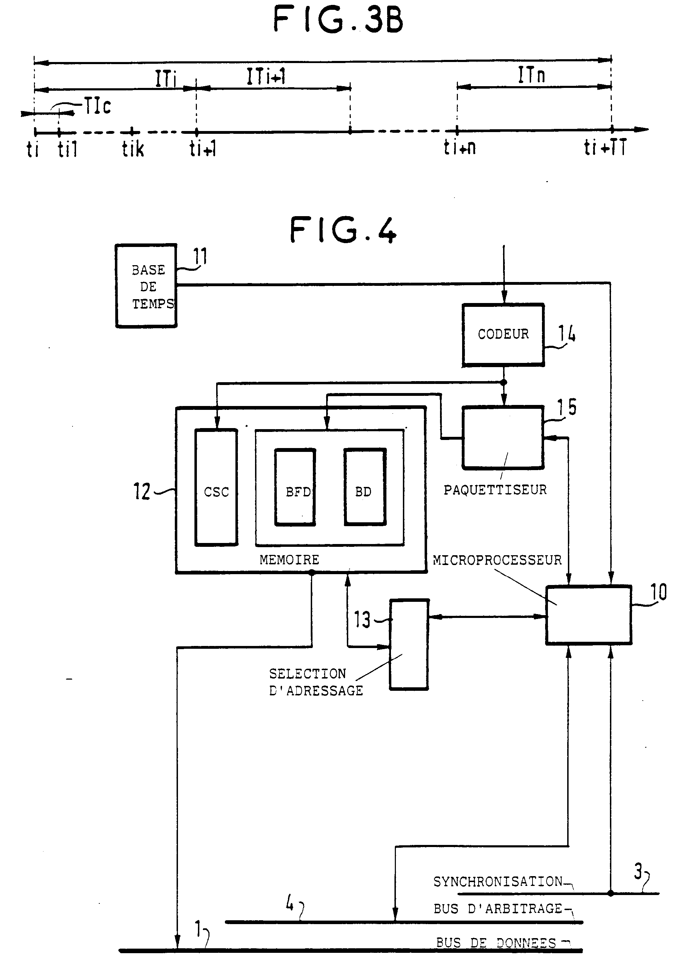

On décrit maintenant en relation avec les figures 3a et 3b l'algorithme de gestion d'accès au support de transmission mis en oeuvre dans chaque station.

A un instant d'accès idéal ti, (début d'un intervalle de temps d'accès idéal ITi), débute la paquettisation de données relatives à une station I à laquelle est affecté idéalement cet intervalle de temps, et qui seront (théoriquement) à transmettre sur le bus de données à l'instant-trame suivant, soit ti + T_{T}.

A cet instant ti, on procède à l'examen des priorités pour la transmission sur le bus de données, d'une part des données en mode circuit stockées dans les différentes stations dans un registre (ou "buffer") référencé CSC, et d'autre part des données déjà paquettisées, dont la paquettisation a commencé à l'instant-trame précédent, soit ti - T_{T} et se trouvant dans un buffer référencé BF2 (BF2 (i) pour la station I) pour le trafic en mode paquet synchrone, ou dans un buffer référencé BD (BD (i) pour la station I) pour le trafic en mode paquet asynchrone.

La gestion de l'accès au bus de données à l'instant ti se fait plus précisément de la façon suivante : Si des données sont présentes dans un buffer CSC d'une station quelconque, le contenu de celui-ci est "déversé" en priorité sur le bus de données à raison d'une cellule en circuit par temps-cellule "tik" à l'intérieur de l'intervalle de temps ITi considéré.

Si les buffers CSC sont vides, on regarde alors si des données sont présentes dans le buffer BF2 (i) de la station I considérée. Si tel est le cas, le contenu de celui-ci n'est pas "déversé" directement sur le bus de données, mais après arbitrage d'un conflit d'accès éventuel avec du trafic de même type "débordé" de stations déjà intervenues précédemment sur le bus de données, cet arbitrage se faisant au travers d'un mécanisme d'arbitrage qui sera décrit par la suite. Si la demande de la station I, au travers de ce mécanisme d'arbitrage, réussit, le contenu du buffer BF2 (i) est "déversé" sur le bus de données, temps-cellule après temps-cellule, dans la mesure où le temps d'accès idéal suivant, soit tᵢ₊₁, affecté idéalement à une station I+1 n'est pas atteint, et étant par ailleurs procédé à chaque temps-cellule, au respect de priorité d'une éventuelle cellule en circuit intervenant à cet instant dans toute station.

Lorsque ce buffer BF2 (i) est vide, il est procédé de même à un examen du contenu de buffer BD (i). Si celui-ci est plein, il est "déversé" de même cellule par cellule, dans la mesure où le temps d'accès idéal suivant, soit tᵢ₊₁, n'est pas atteint, et en procédant à chaque temps-cellule à un respect de priorité en faveur d'un éventuel trafic en mode circuit à écouler à l'instant considéré, ou à un respect de priorité en faveur d'un éventuel trafic en mode paquet asynchrone "débordé" de stations déjà intervenues précédemment sur le bus de données.

En cas d'échec d'une demande d'accès du buffer BF2 (i) ou BD (i) après application du mécanisme d'arbitrage, c'est le trafic issu du buffer BF2 (j) ou BD (j) de la station J sélectionnée à l'issue de l'arbitrage comme étant la plus prioritaire, qui est "déversé" sur le bus de données, cellule après cellule, dans la mesure où l'instant d'accès idéal suivant soit t i+1, n'est pas encore atteint, et en procédant également à chaque cellule à un respect de priorité en faveur d'un éventuel trafic en mode circuit à écouler à l'instant considéré.

Lorsque l'instant d'accès idéal suivant est atteint, le processus ainsi décrit est renouvelé.

Il est par ailleurs possible de prévoir un niveau de priorité supplémentaire, entre le trafic en mode circuit et le trafic "débordé" en mode paquet, afin de permettre l'écoulement, avec une priorité correspondante, d'un trafic en mode paquet synchrone "externe" c'est-à-dire venant de l'extérieur de ce réseau et arrivant sur celui-ci via un coupleur (référencé 5 sur la figure 1).

On a désigné sur la figure 3a par BF1 le registre ou "buffer" dans lequel est stocké le trafic correspondant de ce coupleur, étant entendu que ce coupleur comporte également un tampon, où "buffer" CSC pour le trafic en mode circuit et un buffer BD (i) pour le trafic en mode paquet asynchrone traités respectivement avec la même priorité que le trafic "interne" en mode circuit ou le trafic "interne" en mode paquet asynchrone généré par les stations.

On notera qu'une telle introduction d'un niveau de priorité supplémentaire constitue une cause supplémentaire de "débordement" de trafic en mode paquet généré par les stations.

On décrit maintenant, en relation avec la figure 4, le schéma de chacune des stations permettant l'application de l'algorithme décrit ci-dessus. Seuls seront décrits les éléments de chaque station spécifiques à un seul sens de transmission, à savoir de la station vers le bus données.

Ce schéma est organisé autour d'un microprocesseur 10 qui communique avec un certain nombre d'éléments parmi lesquels :
- une base de temps 11, lui fournissant la fréquence de répétition des temps-cellules, intervalles de temps et trames sur le bus de données,
- un bus d'arbitrage 4 commun aux différentes stations,
- un bloc de mémoire 12 contenant les buffers CSC, BF2 et BD (CSC, BF1 et BD s'il s'agit d'un coupleur) avec lequel il communique par l'intermédiaire d'un organe de sélection d'adressage 13.

Les données inscrites dans ces buffers sont issues d'un codeur 14 pour le trafic en mode circuit, où d'un paquettiseur 15 pour le trafic en mode paquet, le microprocesseur 10 réagissant sur ce paquettiseur pour assurer la synchronisation de paquettisation décrite plus haut.

Ces deux éléments (codeur et paquettiseur) sont bien connus et ne seront donc pas redécrits ici. On rappellera simplement que le paquettiseur permet de constituer des données en paquets comportant soit des données à transmettre, soit des informations de signalisation nécessaires à leur acheminement, et que le codeur permet de générer différents octets de parole issus de différents utilisateurs raccordés à la station considérée, ces octets étant multiplexés en cellules en circuits, les informations de signalisation étant transmises séparément des informations (ou octets) de parole.

Les informations d'arbitrage appliquées sur le bus d'arbitrage 4 sont relatives au degré de priorité des différents trafics présents dans les buffers détectés occupés de la mémoire 12, cette détection d'occupation étant faite par le microprocesseur 10 via l'organe de sélection d'adressage 13.

L'arbitrage est réalisé par comparaison des informations d'arbitrage appliquées au même instant par différentes stations sur le bus d'arbitrage.

Plus particulièrement cet arbitrage est réalisé par une opération d'écriture sur ce bus, suivie d'une opération de lecture, une éventuelle coïncidence entre les deux informations, écrite puis lue par une station sur le bus d'arbitrage indiquant un réglement du conflit en faveur de cette station. En l'occurence l'écriture sur le bus d'arbitrage étant telle que celui-ci change d'état par application d'un élément binaire "0", une adresse considérée comme prioritaire à l'issue d'une lecture consécutive sur ce bus étant alors celle qui comporte le plus d'éléments binaires à "0" les informations d'arbitrage relatives au degré de priorité des différents buffers sont établies en conséquence.

Par ailleurs les informations d'arbitrage relatives aux buffers BF2 et BD comportent, outre une information relative au degré de priorité de ces buffers, une information indiquant l'ancienneté du trafic à écouler.

Ceci peut être obtenu simplement en adjoignant à l'information relative au degré de priorité de ce type de trafic, une information codant l'instant idéal d'accès de la station à l'origine de ce trafic, en l'occurrence suivant un code comportant le plus d'éléments binaires à "o" pour un instant idéal d'accès le plus ancien.

Le microprocesseur 10 de chacune des stations a en effet connaissance de l'intervalle de temps idéal d'accès de cette station, celui-ci lui étant communiqué par le contrôleur de gestion de ressources 2 via la liaison de synchronisation 3 (figure 1).

Le résultat de l'arbitrage est utilisé par le microprocesseur 10 d'une station pour sélectionner l'adresse du buffer de cette station considéré comme prioritaire à l'issue de l'arbitrage.

L'accès au bus de données, par les données se trouvant à l'adresse ainsi sélectionnée, se fait de la façon suivante.

Les cellules étant elles-mêmes découpées en octets, et les différents octets d'une même cellule en circuit étant répartis entre différentes stations (la répartition étant assurée par le contrôleur de gestion de ressources 2 au gré des apparitions et des disparitions de communications en mode circuit dans ce réseau) l'accès au bus de données des différents buffers (dans lesquels les informations sont pour cette raison organisée en octets) se fait par adressage de la mémoire 12 aux temps-octets affectés à la station considérée, sous commande du microprocesseur 10 qui, en plus de l'intervalle de temps d'accès idéal affecté à une station, a connaissance des temps-octets affectés à cette station, par la même liaison de synchronisation 3.

## Revendications

1. Procédé de gestion d'accès au support de transmission d'un réseau de commutation réparti multiservices apte à commuter des trafics en mode circuit synchrone et en mode paquet synchrone ou asynchrone, ledit réseau étant architecturé autour d'un support de transmission (1) partagé dans le temps entre différentes stations (A, ..., B), caractérisé en ce que :
- le support de transmission est synchrone et structuré en trames (TT) répétitives, elles-mêmes structurées en intervalles de temps (TIT) eux-mêmes structurés en temps-cellules (TTC), ces derniers étant dimensionnés pour contenir une entité de communication qui peut être suivant le cas, une cellule en circuit ou une cellule en paquet segmenté,
- un intervalle de temps idéal d'accès au support de transmission en mode paquet est affecté respectivement aux différentes stations communiquant à l'intérieur de ce réseau,
- il est procédé à chaque temps-cellule (TTC) et pour l'ensemble des stations, à un arbitrage d'accès au support de transmission, afin d'assurer un accès à ce support en priorité par des cellules en circuit disponibles à cet instant dans toute station.

2. Procédé selon la revendication 1, caractérisé en ce qu'il est procédé à chaque temps-cellule (TTC) et pour l'ensemble des stations (A, ..., B) à un arbitrage d'accès au support de transmission (1), afin d'assurer un accès à ce support, suivant des priorités décroissantes, par des cellules en circuit disponibles à cet instant dans toute station, par des cellules en paquets segmentés synchrones disponibles à cet instant dans toute station ayant un intervalle de temps idéal d'accès antérieur à l'intervalle de temps contenant le temps-cellule considéré, par des cellules en paquets segmentés synchrones disponibles à cet instant dans la station ayant pour intervalle de temps idéal d'accès l'intervalle de temps contenant le temps-cellule considéré, par des cellules en paquets segmentés asynchrones disponibles à cet instant dans toute station ayant un intervalle de temps idéal d'accès antérieur à l'intervalle de temps contenant le temps-cellule considéré, par des cellules en paquets segmentés asynchrones disponibles à cet instant dans la station ayant pour intervalle de temps idéal d'accès l'intervalle contenant l'instant cellule considéré.

3. Procédé selon l'une des revendications 1 et 2, caractérisé en ce que :
- les temps-cellules (TTC) sont eux-mêmes structurés en temps-octets,
- un temps-octet d'accès au support de transmission est affecté respectivement aux différentes stations (A...B) communiquant en mode circuit à l'intérieur de ce réseau,
- pour toute station autorisée, à l'issue de l'arbitrage, à accéder en mode circuit au support de transmission (1), il est procédé à une validation successive de ces stations en fonction des différents temps-octets qui leur ont été affectés.

4. Procédé selon l'une des revendications 1 à 3, caractérisé en ce qu'un degré de priorité supplémentaire est rajouté entre le trafic en mode circuits et le trafic en mode paquets synchrones provenant de stations ayant un intervalle de temps idéal d'accès antérieur à l'intervalle de temps contenant le temps-cellule considéré, destiné au trafic en mode paquets venant de l'extérieur du réseau via une station particulière (5) appelée coupleur.

5. Procédé selon l'une des revendications 1 à 4, caractérisé en ce que la paquettisation des informations à transmettre en mode paquet par une station est déclenchée dans cette station à un instant déterminé de manière à faire coïncider l'instant de la fin de paquettisation avec le début de l'intervalle de temps idéal d'accès de cette station.

6. Procédé selon la revendication 5, caractérisé en ce que la paquettisation est déclenchée une trame avant le début de l'intervalle de temps idéal d'accès de la station considérée.

7. Dispositif de gestion d'accès au support de transmission d'un réseau de commutation réparti multiservice, ledit réseau étant apte à commuter des trafics en mode circuit synchrone et en mode paquet synchrone ou asynchrone et étant architecturé autour d'un support de transmission (1) partagé dans le temps entre différentes stations (A, ..., B), ce dispositif étant destiné à la mise en oeuvre du procédé selon l'une des revendications 1 à 6 et caractérisé en ce qu'il est réparti dans chaque station (A, ..., B), chacune d'elles comportant :
- une série de registres (CSC, BF1, BF2, BD) spécialisés par type de trafic,
- des moyens (10) pour détecter à chaque temps-cellule du support de transmission l'état d'occupation de ces registres,
- des moyens d'arbitrage (10, 4) pour déterminer le trafic et/ou la station prioritaire à l'instant considéré,

8. Dispositif selon la revendication 7, caractérisé en ce que les moyens d'arbitrage comportent un bus (14), dit bus d'arbitrage, commun aux différentes stations, sur lequel sont effectuées successivement des opérations d'écriture d'informations d'arbitrage et de lecture d'informations alors présentes sur ce bus, une éventuelle identité entre les informations écrites puis lues détectée par une station traduisant le caractère prioritaire de cette station.

9. Dispositif selon la revendication 8, caractérisé en ce que les informations d'arbitrage écrites sur le bus d'arbitrage sont obtenues par codage du degré de priorité des différents types de trafics.

10. Dispositif selon la revendication 9, caractérisé en ce que dans le cas de trafic en mode paquet l'information de priorité est obtenue par adjonction au degré de priorité de ce trafic d'une information relative à l'ancienneté du trafic non écoulé à l'instant considéré.

11. Dispositif selon la revendication 10, caractérisé en ce que l'information relative à l'ancienneté du trafic non écoulé à l'instant considéré est obtenue par codage de l'intervalle de temps idéal d'accès de la station à l'origine de ce trafic non écoulé.

## Patentansprüche

1. Verfahren zur Verwaltung des Zugriffs zum Übertragungsträger eines verteilten Mehrfachdienst-Vermittlungsnetzes, das Nachrichten im synchronen Schaltungsmodus, im synchronen Paketmodus und im asynchronen Paketmodus vermitteln kann, wobei das Netz im Kern einen Übertragungsträger (1) enthält, der seine Betriebszeit zwischen verschiedenen Stationen (A, ..., B) aufteilt, dadurch gekennzeichnet:
- daß der Übertragungsträger synchron ist und in aufeinanderfolgenden Rahmen (TT) strukturiert ist, die ihrerseits in Zeitintervallen (TIT) strukturiert sind, welche wiederum in Zellentakte (TTC) unterteilt sind, wobei letztere so dimensioniert sind, daß sie eine Nachrichteneinheit enthalten, die je nachdem eine Zelle im Schaltungsmodus oder eine Zelle im segmentierten Paketmodus ist,
- daß ein ideales Zeitintervall des Zugriffs zum Übertragungsträger im Paketmodus den verschiedenen in diesem Netz miteinander verkehrenden Stationen zugewiesen wird,
- daß für jeden Zellentakt (TTC) und für die Gesamtheit der Stationen eine Schlichtung des Zugriffs zum Übertragungsträger erfolgt, um einen Zugriff zu diesem Träger vorrangig für in diesem Augenblick in irgendeiner Station verfügbare Zellen im Schaltungsmodus zu gewährleisten.

2. Verfahren nach Anspruch 1, dadurch gekennzeichnet, daß in jedem Zellentakt (TTC) und für die Gesamtheit der Stationen (A, ..., B) eine Schlichtung des Zugriffs zum Übertragungsträger (12) erfolgt, um gemäß abfallenden Prioritäten Zugriff zu diesem Träger zu verschaffen für in diesem Zeitpunkt in irgendeiner Station verfügbare Zellen im Schaltungsmodus, dann für in diesem Zeitpunkt in irgendeiner Station verfügbare Zellen im segmentierten synchronen Paketmodus, die ein ideales Zugriffszeitintervall älter als das Zeitintervall besitzen, das der betrachtete Zellentakt enthält, dann für Zellen im synchronen segmentierten Paketmodus, die in diesem Zeitpunkt in der Station vorliegen, deren ideales Zugriffszeitintervall das Zeitintervall mit dem betrachteten Zellentakt enthält, dann für in diesem Zeitpunkt in irgendeiner Station verfügbare Zellen im asynchronen segmentierten Paketmodus, deren ideales Zugriffszeitintervall älter als das Zeitintervall in dem betrachteten Zellentakt ist, und dann für in diesem Zeitpunkt in der Station mit einem idealen Zugriffszeitintervall gleich dem des betrachteten Zellentakts im asynchronen segmentierten Paketmodus verfügbare Zellen.

3. Verfahren nach einem der Ansprüche 1 und 2, dadurch gekennzeichnet, daß
- die Zellentakte (TTC) ihrerseits in Bytetakte strukturiert sind,
- ein Bytetakt zum Zugriff zum Übertragungsträger jeder der verschiedenen Stationen (A, ..., B) zugewiesen ist, die im Schaltungsmodus innerhalb dieses Netzes miteinander verkehren,
- für jede Station, die aufgrund der Schlichtung im Schaltungsmodus auf den Übertragungsträger (1) zugreifen darf, eine aufeinanderfolgende Validierung dieser Stationen abhängig von den verschiedenen Bytetakten erfolgt, die ihnen zugeteilt sind.

4. Verfahren nach einem der Ansprüche 1 bis 3, dadurch gekennzeichnet, daß ein zusätzlicher Prioritätsgrad zwischen den Verkehr im Schaltungsmodus und den Verkehr im synchronen Paketmodus eingefügt wird, der von Stationen mit einem idealen Zugriffszeitintervall kommt, das älter als das Zeitintervall des betrachteten Zellentakts ist, wobei dieser zusätzliche Prioritätsgrad für den Verkehr im Paketmodus bestimmt ist, der von außerhalb des Netzes über eine besondere Station (5) kommt, die Koppler genannt wird.

5. Verfahren nach einem der Ansprüche 1 bis 4, dadurch gekennzeichnet, daß die Paketbildung der von einer Station im Paketmodus zu übertragenden Informationen in dieser Station in einem bestimmten Augenblick ausgelöst wird, so daß der Zeitpunkt des Endes der Paketbildung mit dem Beginn des idealen Zugriffszeitintervalls dieser Station zusammenfällt.

6. Verfahren nach Anspruch 5, dadurch gekennzeichnet, daß die Paketbildung einen Rahmen vor dem Beginn des idealen Zugriffszeitintervalls der betrachteten Station ausgelöst wird.

7. Vorrichtung zur Verwaltung des Zugriffs zu einem Übertragungsträger eines verteilten Mehrfachdienst-Vermittlungsnetzes, wobei das Netz Nachrichten im synchronen Schaltungsmodus und im synchronen oder asynchronen Paketmodus vermitteln kann und im Kern einen Übertragungsträger (1) enthält, der im Zeitmultiplex die verschiedenen Stationen (A, ..., B) bedient, wobei diese Vorrichtung zur Durchführung des Verfahrens nach einem der Ansprüche 1 bis 6 bestimmt und dadurch gekennzeichnet ist, daß sie in jeder Station (A, ..., B) verteilt ist, wobei jede Station aufweist:
- eine Gruppe von Registern (CSC, BF1, BF2, BD), die je für einen Verkehrstyp spezialisiert sind,
- Mittel (10), um in jedem Zellentakt des Übertragungsträgers den Belegungszustand dieser Register zu erfassen,
- Schlichtungsmittel (10, 4), um den zum betrachteten Zeitpunkt prioritären Verkehr und/oder die prioritäre Station zu bestimmen.

8. Vorrichtung nach Anspruch 7, dadurch gekennzeichnet, daß die Schlichtungsmittel einen Schlichtungsbus (14) aufweisen, der für diese verschiedenen Stationen gemeinsam wirkt und auf dem nacheinander Schreiboperationen einer Schlichtungsoperation und Leseoperationen der dann auf diesem Bus vorhandenen Information erfolgen, wobei eine eventuelle Identität zwischen den geschriebenen und dann von einer Station gelesenen Informationen ein Merkmal für die Priorität dieser Station bildet.

9. Vorrichtung nach Anspruch 8, dadurch gekennzeichnet, daß die auf den Schlichtungsbus geschriebenen Schlichtungsinformationen durch Kodierung des Prioritätsgrads der verschiedenen Typen von Nachrichten erhalten werden.

10. Vorrichtung nach Anspruch 9, dadurch gekennzeichnet, daß im Fall des Verkehrs im Paketmodus die Prioritätsinformation durch Anfügung einer Information bezüglich dem Altersrang des zum betrachteten Zeitpunkt noch nicht bewältigten Verkehrs zum Prioritätsgrad erhalten wird.

11. Vorrichtung nach Anspruch 9, dadurch gekennzeichnet, daß die Information bezüglich des Altersgrads des im betrachteten Zeitpunkt noch nicht bewältigten Verkehrs durch Kodierung des idealen Zugriffszeitpunkts der Station erhalten wird, die von diesem noch nicht bewältigten Verkehr betroffen ist.

## Claims

1. Method of managing access to the transmission medium of a multiservice distributed switching network adapted to switch traffic in synchronous circuit-switched mode and in synchronous or asynchronous packet-switched mode, the architecture of said network being based on a transmission medium (1) time-shared between different stations (A, ..., B), characterised in that:
- the transmission medium is synchronous and structured in repetitive frames (TT) in turn structured in time slots (TIT) in turn structured in time cells (TTC), the latter being sized to contain a communication entity which can be either a circuit-switched cell or a segmented packet-switched cell,
- an ideal time slot for access to the transmission medium in packet-switched mode is assigned to the respective stations communicating within the network,
- in each time cell (TTC) and for all stations transmission medium access arbitration is applied to procure priority access to this medium for circuit-switched cells available at this time in any station.

2. Method according to claim 1 characterised in that in each time cell (TTC) and for all stations (A, ..., B) transmission medium (1) access arbitration is applied to procure access to this medium, in decreasing priority order, to circuit-switched cells available at this time in any station, to synchronous segmented packet-switched cells available at this time in any station having an ideal access time slot anterior to the time slot containing the time cell in question, to synchronous segmented packet-switched cells available at this time in the station having as its ideal access time slot the time slot containing the time cell in question, to asynchronous segmented packet-switched cells available at this time in any station having for its ideal access time slot a time slot anterior to the time slot containing the time cell in question, and to asynchronous segmented packet-switched cells available at this time in the station having for its ideal access time slot the time slot containing the time cell in question.

3. Method according to claim 1 or claim 2 characterised in that:
- the time cells (TTC) are themselves structured in time bytes,
- a transmission medium access time byte is assigned respectively to the various stations (A ... B) communicating in circuit-switched mode within the network,
- for any station authorised after arbitration to access the transmission medium (1) in circuit-switched mode the stations are enabled successively according to their respective allocated time bytes.

4. Method according to any one of claims 1 to 3 characterised in that an additional priority is added between circuit-switched mode traffic and synchronous packet-switched mode traffic from stations having an ideal access time anterior to the time slot containing the time cell in question for packet-switched mode traffic from outside the network entering the network via a gateway station (5).

5. Method according to any one of claims 1 to 4 characterised in that the packetising of information to be transmitted in packet-switched mode by a station is initiated in that station at a time determined so as to render the end of packetisation coincident with the start of the ideal access time slot of that station.

6. Method according to claim 5 characterised in that packetisation is initiated one frame before the start of the ideal access time slot of the station concerned.

7. Device for managing access to the transmission medium of a multiservice distributed switching network adapted to switch traffic in synchronous circuit-switched mode and in synchronous or asynchronous packet-switched mode, the architecture of said network being based on a transmission medium (1) time-shared between different stations (A, ..., B), this device being adapted to implement the method according to any one of claims 1 to 6 and characterised in that it is distributed between the stations (A, B, etc), each station comprising:
- a series of registers (CSC, BF1, BF2, BD) dedicated to each type of traffic,
- means (10) for detecting in each time cell of the transmission medium the occupied state of these registers,
- arbitration means (10, 4) for determining the traffic and/or the station having the highest priority at the time in question.

8. Device according to claim 7 characterised in that the arbitration means comprise an arbitration bus (14) common to the various stations on which are performed in succession operations to write arbitration information and to read the information then present on the bus, identical written and then read information detected by a station indicating that that station has the highest priority.

9. Device according to claim 8 characterised in that the arbitration information written to the arbitration bus is obtained by encoding the priority of the various types of traffic.

10. Device according to claim 9 characterised in that for packet-switched mode traffic the priority information is obtained by adding to the priority of the traffic information relating to the seniority of traffic not serviced at the time in question.

11. Device according to claim 10 characterised in that the information relating to the seniority of the traffic not serviced at the time in question is obtained by encoding the ideal access time slot of the station originating that traffic.
